# DEMANDE DE BREVET EUROPEEN

(11) **EP 2 047 977 A1**
(43) Date de publication de la demande: **15.04.2009**
(21) Numéro de dépôt: 08017710.8
(22) Date de dépôt: 09.10.2008
(51) Int. Cl.: B32B 5/18, B44C 1/10, B32B 27/36, B32B 27/32

(54) **Ruban de décoration d`un aliment et procédé de fabrication d`un tel ruban**

(30) Priorité: 09.10.2007 FR 0707070
(71) Demandeur: Toda, 88220 Uzemain (FR)
(72) Inventeur: Monnet, Vincent, 88000 Epinal (FR)
(74) Mandataire: Poupon, Michel

(57) **Abrégé**

Ruban de décoration d'un aliment comportant plusieurs couches superposées dont une couche interne (1) destinée à être en contact avec l'aliment, une couche externe (3) disposée du côté opposée à la couche interne, une couche intermédiaire (2) disposée entre la couche interne (1) et la couche externe (3), caractérisé en ce que la couche interne (1) est réalisée en polyester transparent et non imprimé, la couche intermédiaire (2) est réalisé en polypropylène expansé et la couche externe (3) est réalisée en polyester imprimé.

## Description

La présente invention se rapporte aux rubans de décoration utilisés dans le domaine alimentaire.

Plus particulièrement la présente invention concerne un ruban de décoration d'un aliment comportant plusieurs couches superposées dont une couche interne destinée à être en contact avec l'aliment et une couche externe disposée du côté opposé à la couche interne, et une couche intermédiaire disposée entre la couche interne et la couche externe.

Il est connu du document US 3 932 693 un film pour emballage alimentaire constitué d'une couche en polypropylène, d'une deuxième couche en vinylidene chloride polymère, une troisième couche en copolymère éthylène/vinyl acétate, et une couche supérieure constituée d'un second copolymère ethylène/vinyl acétate.

La présente invention vise à réaliser un emballage, en forme de ruban, destiné à être en contact avec des aliments, plus simple et moins coûteux que celui décrit dans le brevet US 3 932 693.

A cet effet, selon l'invention, un ruban de décoration du genre en question est caractérisé en ce que la couche interne est réalisée en polyester transparent et non imprimé, la couche intermédiaire est réalisée en polypropylène expansé et la couche externe est réalisée en polyester imprimé.

Grâce à ces dispositions, on obtient un ruban de décoration simple à fabriquer et moins coûteux que les rubans existant dans l'art antérieur. De plus grâce aux propriétés du matériau constituant la couche interne, cette dernière peut être en contact avec un aliment sans l'altérer d'un point de vue gustatif ou esthétique. De plus la couche interne n'est pas toxique pour les aliments.

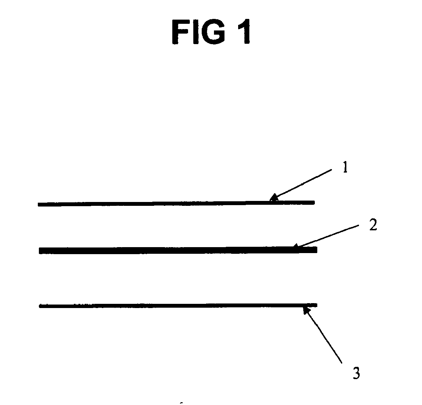

D'autres caractéristiques et avantages de la présente invention apparaîtront au cours de la description suivante en regard de la figure unique annexée qui représente une vue, de côté, éclatée des différentes couches constituant le ruban selon l'invention.

Le ruban de décoration selon l'invention est destiné à être utilisé dans le domaine alimentaire. Plus particulièrement, le ruban selon l'invention peut être utilisé comme une couronne à gateau qui permet de cercler et de décorer un gâteau. Le ruban doit répondre à certains critères définis par la législation concernant les produits entrant en contact avec les aliments.

Le ruban présente une longueur, une largeur et une épaisseur. L'épaisseur est constituée de trois couches différentes, telles que représentées sur la figure annexée. Un première couche 1, dite couche interne, est destinée à être en contact avec l'aliment à décorer ou à cercler. Une deuxième couche 2, dite couche intermédiaire, est adaptée à rigidifier le ruban afin que celui-ci ne se déforme pas dans le sens de la largeur, tout en étant déformable dans le sens de la longueur, de manière à pourvoir encercler un gâteau. La troisième couche 3, nommée couche externe, peut être imprimée, de manière à recevoir des motifs de décoration.

La couche interne 1 et la couche externe 3 sont fabriquées en polyester. La couche interne 1 est en polyester transparent et non imprimé. Ce matériau agit, sur la couche interne 1, comme une pellicule de protection empêchant l'aliment d'être en contact direct avec la couche intermédiaire 2. Elle est apte à être en contact avec les aliments, c'est-à-dire n'est pas toxique et n'altère pas la qualité de l'aliment. Sur la couche externe 3, le polyester présente la qualité de pouvoir recevoir des motifs permettant de décorer la couronne à gâteau. La couche externe 3 est imprimée selon des techniques connues de l'homme du métier.

La couche intermédiaire 2 est fabriquée en polypropylène expansé, qui est la matière principalement utilisée pour la fabrication des Bolducs. Ses propriétés permettent de rigidifier le ruban, pour que celui-ci puisse tenir autour du gâteau, sans se déformer.

Le ruban ainsi constitué, n'est formé que de deux matières différentes, ce qui permet de diminuer les coûts de fabrication, et de simplifier sa fabrication.

Les couches 1, 2, 3 sont fixées entre elles par un adhésif connu dans le domaine alimentaire, pour ce type de matériau. Cela peut être par exemple une colle monocomposant sans solvant en base polyuréthane.

### Le ruban selon l'invention est réalisé de la manière suivante :

Le ruban est réalisé en deux étapes. La première étape consiste à contre-coller la couche intermédiaire 2 avec l'une parmi la couche interne 1 et la couche externe 3, de manière à former un ensemble de deux couches. Puis la surface de polypropylène, c'est-à-dire la surface de la couche intermédiaire 2, de l'ensemble formé est contre-collé avec l'autre parmi la couche interne 1 et la couche externe 3.

Selon une variante de réalisation, les couches 1, 2, 3 sont pré-découpées selon les dimensions du ruban, et sont ensuite collées entre elles. La découpe est réalisée, de manière à ce que toutes les couches présentent la même largeur.

Le ruban selon l'invention offre donc la garantie d'un produit non toxique, et pouvant être utilisé en contact avec des aliments, tout en étant simple et peu coûteux à fabriquer.

## Revendications

1. Ruban de décoration d'un aliment comportant plusieurs couches superposées dont une couche interne (1) destinée à être en contact avec l'aliment, une couche externe (3) disposée du côté opposée à la couche interne, une couche intermédiaire (2) disposée entre la couche interne (1) et la couche externe (3), **caractérisé en ce que** la couche interne (1) est réalisée en polyester transparent et non imprimé, la couche intermédiaire (2) est réalisé en polypropylène expansé et la couche externe (3) est réalisée en polyester imprimé.

2. Ruban selon la revendication précédente, dans lequel les couches (1, 2, 3) sont fixées entre elles par un monocomposant sans solvant base polyuréthane

3. Ruban selon l'une des revendications précédentes, **caractérisé en ce qu'**il est adapté à cercler un gâteau.

4. Procédé de fabrication d'un ruban selon l'une des revendications précédentes, le procédé comportant les étapes suivantes :
Un première étape de contre-collage de la couche intermédiaire (2) avec l'une parmi la couche interne (1) et la couche externe (3) de manière à obtenir un ensemble de deux couches,
Une deuxième étape de contre-collage de la couche intermédiaire de l'ensemble avec l'autre parmi la couche interne (1) et la couche externe (3).

5. Procédé de fabrication selon la revendication précédente dans lequel les couches (1, 2, 3) sont pré-découpées de manière à présenter la largeur du ruban.
